# FASCICULE DE BREVET EUROPEEN

(11) **EP 3 248 871 B1**
(45) Date de publication et mention de la délivrance du brevet: **01.08.2018**
(21) Numéro de dépôt: 17171246.6
(22) Date de dépôt: 16.05.2017
(51) Int. Cl.: B64D 1/22

(54) **AERONEF MUNI D'UN DISPOSITIF DE TREUILLAGE**
LUFTFAHRZEUG, DAS MIT EINER WINDENVORRICHTUNG AUSGESTATTET IST
AN AIRCRAFT PROVIDED WITH A WINCH DEVICE

(30) Priorité: 25.05.2016 FR 1600842
(43) Date de publication de la demande: 29.11.2017
(73) Titulaire: Airbus Helicopters, 13725 Marignane Cedex (FR)
(72) Inventeur: BARBIERI, André, 13960 SAUSSET LES PINS (FR)
(74) Mandataire: GPI & Associés

(56) Documents cités:
- DE-A1- 3 323 513
- GB-A- 297 156
- GB-A- 755 965
- US-A- 2 380 290
- US-A- 3 204 890
- US-A- 4 750 691
- US-A- 5 190 250

## Description

La présente invention concerne un aéronef muni d'un dispositif de treuillage. Le domaine technique de l'invention est donc le domaine technique des appareils de treuillage d'un aéronef.

En effet, un aéronef et plus particulièrement un aéronef pouvant voler à basse vitesse peut être équipé d'un dispositif de treuillage pour transporter des charges externes. A titre illustratif, un giravion est parfois équipé d'un tel dispositif de treuillage. Un dispositif de treuillage peut permettre de hisser des charges externes dans l'aéronef, ou encore peut permettre de transférer des charges externes de l'aéronef vers l'extérieur.

L'expression « charge externe » s'applique non seulement à des objets, mais aussi à des êtres vivants pouvant être portés par le dispositif de treuillage. Un dispositif de treuillage est alors notamment utilisé dans le cadre de missions de sauvetage ou encore lors d'activités commerciales.

Un tel dispositif de treuillage peut comporter un dispositif élévateur pouvant faire descendre ou monter un organe de suspension par rapport au fuselage de l'aéronef. Un tel organe de suspension peut comprendre un câble de suspension par exemple.

Un tel dispositif élévateur est couramment dénommé « treuil » par l'homme du métier. Un dispositif élévateur comprend classiquement un moteur entraînant en rotation un tambour de stockage autour duquel est partiellement enroulé l'organe de suspension. L'expression « partiellement enroulé » signifie qu'une partie de l'organe de suspension peut être enroulée autour du tambour de stockage, une autre partie de l'organe de suspension saillant hors du dispositif élévateur pour être arrimée à une charge externe.

L'agencement d'un dispositif élévateur dans un aéronef peut poser des difficultés.

Un dispositif élévateur peut ainsi être agencé à l'extérieur du fuselage de l'aéronef, en étant par exemple porté par un flanc de cet aéronef. Eventuellement, le dispositif élévateur est porté par une poutre mobile.

Ce type d'agencement peut être toutefois limitatif en raison de la traînée aérodynamique du dispositif élévateur lors du déplacement de l'aéronef.

De manière alternative, le dispositif élévateur peut être agencé dans le fuselage de l'aéronef. L'organe de suspension serpente alors dans le fuselage pour rejoindre le milieu extérieur.

L'agencement du dispositif élévateur dans le fuselage peut toutefois s'avérer délicat en raison de son encombrement.

Le document EP 2 143 633 décrit un dispositif de treuillage et un procédé de récupération d'un berceau de sauvetage

Ce dispositif de treuillage inclut une porte mobile en rotation supportant un dispositif élévateur. Lorsque la porte est ouverte, le dispositif élévateur est situé à l'extérieur du fuselage d'un aéronef. A l'inverse, lorsque la porte est fermée le dispositif élévateur est positionné dans le fuselage.

Ce système permet de positionner le dispositif élévateur dans le fuselage en dehors d'une opération de récupération pour ne pas augmenter la traînée aérodynamique de l'aéronef. Néanmoins, le dispositif élévateur réduit de fait le volume utile dans le fuselage.

Le document US 2002/0020783 décrit un dispositif de treuillage. Le dispositif de treuillage est muni d'un dispositif élévateur amovible et d'une partie fixe agencée dans un fuselage de fait au détriment du volume utile.

Le document FR 2.966.802 décrit un dispositif de treuillage. Ce dispositif de treuillage comprend un dispositif élévateur agencé dans le fuselage d'un aéronef et une poutre de guidage de l'organe de suspension du dispositif élévateur.

Le document US 4,750,691 décrit un dispositif de treuillage. Ce dispositif de treuillage comprend un dispositif élévateur agencé dans le fuselage d'un aéronef et une poutre de guidage. La poutre de guidage peut pivoter entre une position déployée de treuillage et une position rétractée.

Une telle poutre de guidage peut éventuellement obstruer un accès vers une cabine dans une position rétractée.

Le document US 3,561,704 décrit un dispositif de treuillage d'un avion. Ce dispositif de treuillage inclut une porte mobile en rotation supportant un dispositif élévateur. Le dispositif élévateur peut coulisser sur un rail qui s'étend en partie sur un plafond du fuselage et sur la porte.

Le document DE 3323513 décrit un dispositif de treuillage. Ce dispositif de treuillage inclut un dispositif élévateur solidaire d'une poutre de guidage. Le dispositif élévateur et la poutre de guidage sont mobiles en translation entre une position rétractée d'agencement dans une cabine et une position déployée de treuillage.

Le document FR 1 577 830 décrit un dispositif de treuillage. Ce dispositif de treuillage inclut un dispositif élévateur. Le dispositif élévateur est porté par un support pivotant, pour pivoter entre une position rétractée d'agencement dans une cabine et une position déployée de treuillage.

Le document FR 2 346 276 décrit un dispositif de treuillage. Ce dispositif de treuillage inclut un dispositif élévateur muni d'une poutre de guidage. Le dispositif élévateur et la poutre de guidage coulissent sur un rail entre une position de retrait et une position de sortie.

Le document US 3 478 904 est éloigné du domaine de l'invention en décrivant un mécanisme de monte-charge facilitant l'embarquement et le débarquement dans le cargo d'un aéronef.

Le document FR 2.955.832 décrit un support amovible d'un dispositif élévateur. En position de montage, le support amovible est disposé à l'extérieur d'un fuselage au niveau d'une porte d'accès à l'intérieur de ce fuselage.

Le document GB 2 303 837 décrit un dispositif de treuillage. Ce dispositif de treuillage inclut un dispositif élévateur fixé à l'extérieur d'un fuselage. De plus, le dispositif de treuillage comprend un déflecteur amovible utilisé pour éloigner le câble de suspension du dispositif élévateur du train d'atterrissage de l'aéronef. Ce déflecteur est soit stocké contre un habillage vertical du fuselage de l'aéronef, soit monté coulissant sous un plancher d'une cabine.

Le document US 4,566,659 décrit un dispositif de treuillage. Ce dispositif de treuillage inclut un dispositif élévateur fixé à l'extérieur d'un fuselage. Le dispositif élévateur est monté sur un support pivotant qui est fixé sur un flanc de l'aéronef. Le support pivotant permet de déplacer le dispositif élévateur pour accéder à un moteur lors de sa maintenance.

Le document US 2014/0090232 décrit un système rotatif avec vis permettant de varier l'inclinaison angulaire d'un dispositif élévateur situé à l'extérieur d'un fuselage de l'aéronef. Ce système rotatif permet de descendre le dispositif élévateur pour accéder au moteur de l'aéronef lors de sa maintenance.

Le document GB 860.009 décrit un dispositif élévateur fixé à l'intérieur d'une porte.

Le document US 5.190.250 décrit un dispositif élévateur intégré à une nacelle placée sous une aile d'un hélicoptère.

Les documents GB 755965, US 3204890, US 2380290, GB 297156, US 5190250, US 4750691, DE 3323513 et US 2016/340038 sont connus.

La présente invention a alors pour objet de proposer un dispositif de treuillage différent visant à éviter certains inconvénients précités.

L'invention vise alors un aéronef. Cet aéronef est muni d'une aile s'étendant longitudinalement d'un bord aérodynamique dit « bord de fuite » vers un bord aérodynamique dit « bord d'attaque ». Cet aéronef est pourvu d'un dispositif de treuillage, ce dispositif de treuillage étant pourvu d'un dispositif élévateur qui comporte un tambour de stockage. Le dispositif de treuillage est aussi pourvu d'un organe de suspension qui s'étend d'une première extrémité vers une deuxième extrémité libre saillant du dispositif élévateur, le dispositif élévateur comportant un organe moteur pour enrouler l'organe de suspension autour du tambour de stockage et dérouler l'organe de suspension en dehors du tambour de stockage.

Le dispositif élévateur est au moins partiellement entouré par un capotage de cette aile, le dispositif élévateur étant agencé dans un volume intérieur de l'aile dans une position dite « position aérodynamique » atteinte par ce dispositif élévateur et par le capotage.

La deuxième extrémité de l'organe de suspension peut être agencée en dehors de l'aile durant les opérations de treuillage, et dans l'aile en l'absence d'opération de treuillage.

Eventuellement, un crochet attaché à cette deuxième extrémité peut être situé en permanence au moins partiellement en dehors de l'aile. Dès lors, l'organe de suspension peut être tendu en l'absence d'opération de treuillage pour éviter un déplacement du crochet en vol, par exemple en bloquant une butée du crochet contre l'aile ou contre le dispositif élévateur.

Le terme « capotage » désigne une paroi en contact avec un milieu extérieur à l'aéronef.

L'expression « un organe moteur pour enrouler ledit organe de suspension autour du tambour de stockage et dérouler ledit organe de suspension en dehors du tambour de stockage » signifie que l'organe moteur agit soit sur l'organe de suspension, soit sur le tambour de stockage ou encore soit sur un autre organe du dispositif élévateur pour pourvoir enrouler/dérouler l'organe de suspension autour du tambour de stockage.

L'organe moteur comporte donc à cet effet au moins un moteur, tel qu'un moteur électrique par exemple.

Par ailleurs, l'organe de suspension peut comporter au moins un câble et/ou au moins une chaîne par exemple. Cet organe de suspension est en outre partiellement enroulé autour du tambour de stockage, du moins lorsque l'organe de suspension n'est pas entièrement déroulé en dehors de ce tambour de stockage.

Le dispositif élévateur peut alors être d'un type connu, en comportant au moins un moteur et au moins un tambour de stockage. Par exemple, le dispositif élévateur peut être du type connu sous la dénomination commerciale Goodrich 44312.

Ce dispositif élévateur est intégré dans une aile en étant agencé dans l'aile, au minimum lorsque le dispositif élévateur se trouve dans une position dite « position aérodynamique ». Dans cette position aérodynamique, le capotage délimite partiellement le volume intérieur accueillant le dispositif élévateur. Eventuellement, le dispositif élévateur peut être disposé en dehors du volume intérieur lorsque le dispositif élévateur se trouve dans une autre position.

Dès lors, le dispositif élévateur est agencé au sein même de l'aile au moins durant certaines phase de vol, et non pas dans une nacelle fixée sous l'aile. Dès lors, le dispositif élévateur se distingue aussi des dispositifs agencés dans une cabine et tendant à restreindre le volume utile de la cabine voire à obstruer partiellement une porte d'accès de cette cabine.

L'agencement en dehors de la cabine tend en outre à éviter la projection de lubrifiant par exemple dans cette cabine.

En outre, en intégrant le dispositif élévateur dans l'aile dans sa position aérodynamique, la traînée aérodynamique du dispositif de treuillage est optimisée. Cette caractéristique justifie l'utilisation de l'expression « position aérodynamique » qualifiant la position atteinte par le dispositif élévateur dans cette configuration.

Par ailleurs, le capotage est un élément constitutif de l'aile. Par suite, le capotage fait office de moyen de protection du dispositif élévateur et de revêtement de l'aile.

Par ailleurs, la deuxième extrémité de l'organe de suspension saille toujours de l'aile, au moins durant les opérations de treuillage. Cette deuxième extrémité peut être reliée à un dispositif de fixation d'une charge, tel qu'un crochet par exemple. Ainsi, le dispositif de treuillage peut porter par exemple un individu, une civière via des pantoires ou encore un dispositif apte à traverser le feuillage des arbres d'une forêt. Un tel dispositif apte à traverser le feuillage des arbres est parfois dénommé « jungle penetrator » en langue anglaise.

L'aéronef peut de plus comporter une ou plusieurs des caractéristiques qui suivent.

Ainsi, selon une réalisation, le dispositif élévateur est agencé dans un des bords aérodynamiques de l'aile, le capotage étant une partie du bord aérodynamique contenant le dispositif élévateur.

Selon cette première réalisation le dispositif élévateur est intégré dans le bord d'attaque ou dans le bord de fuite de l'aile. Le capotage représente alors une partie d'un carénage de bord d'attaque ou d'un carénage de bord de fuite.

En outre, l'aile peut porter une hélice disposée longitudinalement d'un côté d'un des bords aérodynamiques. Dès lors, le dispositif élévateur peut être agencé dans l'autre bord aérodynamique.

Par exemple, l'hélice est portée par un mât saillant du bord d'attaque. Dès lors, selon cette alternative, le dispositif élévateur peut être disposé dans un capotage du bord de fuite. A l'inverse, si l'hélice est portée par un mât saillant du bord de fuite, le dispositif élévateur peut être disposé dans un capotage du bord d'attaque.

Cette alternative vise à limiter les risques d'interférence entre une hélice et une charge treuillée par le dispositif de treuillage.

En outre, lorsque le dispositif élévateur est disposé dans un bord aérodynamique, le dispositif élévateur peut s'étendre principalement selon une envergure de l'aile dans sa position aérodynamique.

Le terme « principalement » signifie que la dimension la plus importante du dispositif élévateur s'étend sensiblement selon la direction associée.

Par ailleurs, le bord aérodynamique contenant le dispositif élévateur peut comprendre successivement un tronçon d'emplanture, ledit capotage puis un tronçon d'extrémité.

Le bord aérodynamique de l'aile coopérant avec le dispositif élévateur peut ainsi comprendre un tronçon d'emplanture, auquel n'appartient pas le capotage du dispositif de treuillage, pour éloigner le dispositif élévateur du fuselage. Par exemple, ce tronçon d'emplanture s'étend en envergure sur une longueur de l'ordre de 50 centimètres.

A la suite du tronçon d'emplanture, le bord aérodynamique comporte le capotage. Ce capotage peut être disposé dans la continuité du tronçon d'emplanture dans la position aérodynamique, une surface extérieure du capotage affleurant une surface extérieure du tronçon d'emplanture. Par exemple, ce capotage s'étend en envergure sur une longueur de l'ordre d'un mètre pour qu'en vol d'avancement le dispositif élévateur ne perturbe pas l'écoulement aérodynamique de l'air autour de l'aile.

Enfin, à la suite du capotage, le bord aérodynamique comporte le tronçon d'extrémité. Ce tronçon d'extrémité peut être disposé dans la continuité du capotage dans la position aérodynamique, une surface extérieure du capotage affleurant une surface extérieure du tronçon d'extrémité. Dans cette position, le tronçon d'emplanture ainsi que le capotage et le tronçon d'extrémité forment conjointement une surface sensiblement continue.

Selon une deuxième réalisation, le capotage est un carénage dit « carénage karman » de l'aile.

Un tel carénage karman est usuellement utilisé pour éviter la formation d'un écoulement tourbillonnaire.

Par exemple, un bord aérodynamique et notamment un bord de fuite peut avoir une épaisseur insuffisante entre son extrados et son intrados pour accueillir le dispositif élévateur en son sein.

Cette deuxième réalisation propose notamment de remédier à cette difficulté en agençant le dispositif élévateur dans un carénage karman pour assurer la continuité aérodynamique de l'aile sans déformer un bord aérodynamique.

Le carénage karman peut avoir une épaisseur de l'ordre de l'épaisseur maximale de l'aile par exemple.

Selon cette deuxième réalisation, le dispositif élévateur peut en outre s'étendre principalement longitudinalement dans sa position aérodynamique.

Selon un autre aspect, l'organe de suspension peut traverser le capotage.

L'organe de suspension peut ainsi s'étendre en dehors de l'aéronef.

Selon un autre aspect, le dispositif de treuillage peut comporter un bras mobile porté par une articulation, l'articulation conférant au bras mobile au moins un degré de liberté en rotation autour d'un axe de rotation par rapport à l'aile, le dispositif élévateur étant porté par le bras mobile, le bras mobile et le capotage étant conjointement mobiles entre la position aérodynamique et une position dite « position déportée ».

Le terme « articulation » désigne un système mécanique muni d'un organe immobile par rapport à l'aile et au fuselage, ce système mécanique conférant un degré de liberté en rotation entre deux éléments.

Par exemple, l'articulation comprend une chape mâle fixée à l'aile ou au fuselage, et une broche traversant la chape mâle et une chape femelle du bras mobile.

Le capotage peut être fixé au dispositif élévateur et/ou au bras mobile en utilisant des liaisons mécaniques usuelles, telles que des pattes de fixation par exemple.

Le bras mobile ainsi que le dispositif élévateur et le capotage peuvent alors conjointement être déplacés au moins en rotation autour de l'axe de rotation. Cet axe de rotation peut être un axe s'étendant en élévation à savoir sensiblement selon une direction allant de l'intrados à l'extrados de l'aile.

Dès lors, le dispositif élévateur peut être déplacé pour faciliter la manoeuvre de ce dispositif élévateur, ou encore pour faciliter l'embarquement d'une charge par exemple. Dans la position déportée, le dispositif élévateur est par exemple plus proche d'une cabine que dans la position aérodynamique.

Selon un autre agencement, dans la position aérodynamique, le dispositif élévateur est par exemple plus proche d'une cabine que dans la position déportée. Par exemple, un individu est treuillé vers l'aéronef lors d'une mission de secours, en positionnant le dispositif élévateur dans la position déportée. Lorsque l'individu arrive au niveau de l'aéronef, le dispositif élévateur est positionné dans la position aérodynamique pour faciliter son embarquement dans l'aéronef.

Par ailleurs, le capotage peut fermer le volume intérieur dans la position aérodynamique, le capotage ouvrant le volume intérieur sur un milieu extérieur à l'aéronef dans la position déportée.

Le terme « fermer » signifie que le capotage délimite alors le volume intérieur. Le capotage comporte à cet effet une surface extérieure affleurant une surface extérieure adjacente de l'aile.

Selon un autre aspect, le dispositif de treuillage peut comporter un système motorisé relié au bras mobile pour déplacer en rotation le bras mobile autour de l'axe de rotation.

Le système motorisé peut comporter un moteur, par exemple électrique, ou encore un vérin capable d'exercer un effort sur le bras mobile pour le déplacer.

Selon un autre aspect, l'aéronef comportant un fuselage muni d'au moins un cadre et d'un revêtement qui est fixé au cadre, l'articulation peut être fixée au cadre.

L'articulation est installée sur un cadre du fuselage, par exemple un cadre situé à proximité d'une porte latérale. Un organe immobile de l'articulation est favorablement installé à la jonction du cadre de cette porte et d'un cadre relié à une aile.

Un encadrement de porte nécessite un cadre structural. L'implantation de l'aile nécessite, elle aussi, un cadre structural. Un organe immobile de l'articulation peut alors se situer à la jonction de ces cadres qui représente une zone de fait renforcée structuralement. L'agencement de l'invention ne nécessite alors pas l'adjonction de renforts qui ont un impact massique non négligeable.

Selon une autre alternative, un organe immobile de l'articulation est par exemple solidaire d'un plancher ou d'un plafond de l'aéronef. Notamment, un organe immobile de l'articulation peut être solidaire du plancher mécanique de l'aéronef portant l'installation motrice de cet aéronef.

Selon une autre alternative, l'articulation est fixée à un organe de l'aile.

Un organe immobile de l'articulation peut être fixé au fuselage, mais peut alternativement être fixé dans l'aile en étant par exemple fixé à un longeron ou une nervure de l'aile.

Selon un autre aspect, le tronçon d'emplanture comporte le cas échéant au moins un volet mobile et un système de mobilité, le système de mobilité coopérant avec le volet pour déplacer le volet entre une position fermée et une position ouverte, le volet entravant le déplacement du bras mobile dans la position fermée et n'entravant pas ledit déplacement dans la position ouverte.

En cas de présence d'un tronçon d'emplanture et d'un bras mobile, le tronçon d'emplanture peut s'ouvrir en déplaçant au moins un volet. Le bord aérodynamique est découpé en élévation en deux parties pour présenter une échancrure dans la position ouverte afin de ne pas entraver le déplacement du bras mobile.

Ce système est d'autant plus intéressant si le bras mobile traverse le tronçon d'emplanture pour être articulé à une articulation solidaire du fuselage de l'aéronef.

Sous l'action du bras mobile, un levier est par exemple déplacé pour permettre une rotation verticale d'un volet. Un moteur ou un vérin peut aussi être utilisé pour déplacer un volet.

Selon un autre aspect, l'aile peut comporter au moins un déflecteur pour dévier un flux d'air susceptible d'impacter le dispositif de treuillage.

Un déflecteur peut-être par exemple ajouté devant un crochet fixé à la deuxième extrémité de l'organe de suspension au regard du sens de déplacement vers l'avant de l'aéronef.

Selon un autre aspect, l'aéronef peut être un aéronef apte à voler en stationnaire.

Le dispositif élévateur peut notamment être positionné sous le centre de poussée de l'aile pour optimiser le centrage de cet aéronef.

L'aéronef peut être un aéronef à décollage et atterrissage vertical, et/ou un aéronef apte à rester dans une position stationnaire en vol. L'aéronef peut notamment être un giravion, et en particulier un hélicoptère par exemple.

L'aéronef peut aussi être un aéronef sans pilote de type drone.

L'agencement d'un dispositif élévateur dans une aile d'un drone permet d'optimiser le volume utile du fuselage du drone, pour par exemple y agencer des équipements divers de type caméra, batterie, réservoir...

Selon un autre aspect, plusieurs dispositifs de treuillage selon l'invention peuvent être disposés dans une aile, discontinue ou continue, ou dans plusieurs ailes.

Par exemple, une aile comporte deux demi-ailes disposées transversalement de part et d'autre du fuselage, chaque demi-aile comprenant un tel dispositif de treuillage.

L'invention et ses avantages apparaîtront avec plus de détails dans le cadre de la description qui suit avec des exemples donnés à titre illustratif en référence aux figures annexées qui représentent :
- la figure 1, une vue de face d'un aéronef selon l'invention,
- la figure 2, une vue schématique présentant un dispositif élévateur et un capotage,
- la figure 3, une vue de côté d'un aéronef selon l'invention,
- la figure 4 une vue schématique présentant un dispositif de treuillage disposé dans un bord de fuite,
- la figure 5 une vue schématique présentant un dispositif de treuillage disposé dans un carénage karman,
- la figure 6, une vue explicitant le déplacement d'un bras mobile,
- les figures 7 à 9, des vues présentant un dispositif de treuillage muni d'un dispositif élévateur mobile disposé dans un carénage karman.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Les termes « longitudinalement » et « longitudinale » sont relatifs à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

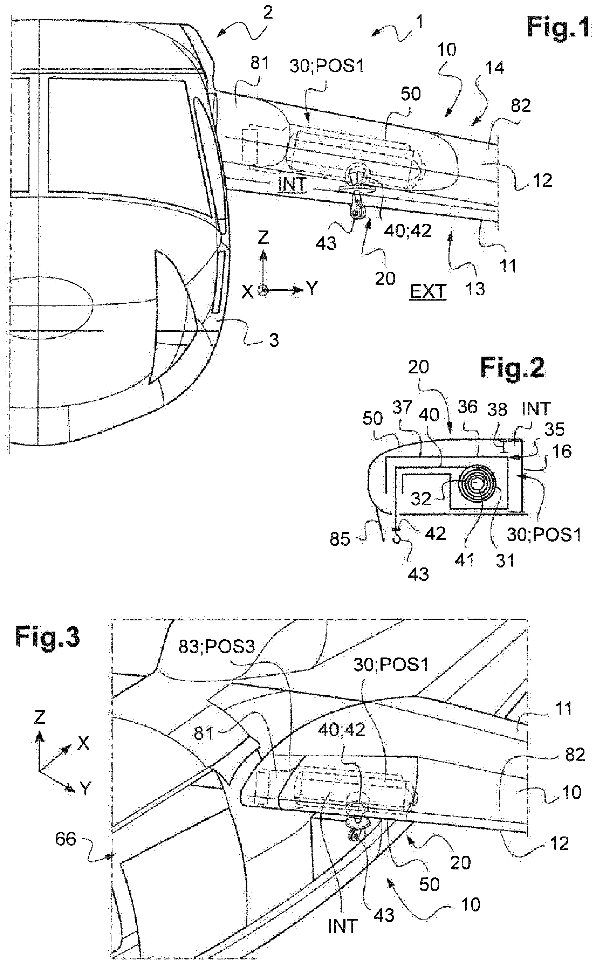

La figure 1 présente un aéronef 1 selon l'invention.

Cet aéronef 1 peut être un aéronef pouvant voler à basse vitesse, voire de manière stationnaire. En particulier, l'aéronef 1 peut être un aéronef capable d'effectuer un décollage ou un atterrissage vertical, voire un vol dans une position stationnaire. Dès lors, l'aéronef 1 peut être un giravion muni au moins pendant certaines phases de vol d'une voilure tournante.

L'aéronef 1 peut comprendre un poste de pilotage, mais peut aussi être un drone sans pilote.

Cet aéronef 1 est muni d'un fuselage 2 et d'au moins une aile 10. Classiquement, le fuselage 2 comprend notamment des cadres structuraux non visibles sur la figure 1 et un revêtement 3 extérieur.

L'aile 10 s'étend latéralement au moins d'un flanc du fuselage 2. L'aile 10 comporte donc au moins un tronçon aérodynamique qui s'étend classiquement en envergure du fuselage vers une extrémité libre. En outre, l'aile 10 s'étend longitudinalement de l'arrière vers l'avant d'un bord aérodynamique dit « bord de fuite 11 » vers un bord aérodynamique dit « bord d'attaque 12 ». L'aile s'étend de plus en épaisseur d'un intrados 13 vers un extrados 14.

L'aile 10 comporte un revêtement extérieur et des organes structuraux disposés à l'intérieur de ce revêtement. Ainsi, l'aile comporte au moins un longeron, voire des nervures, des raidisseurs, des moyens de remplissage....

Par ailleurs, l'aéronef 1 est muni d'un dispositif de treuillage 20 pour porter une charge.

En référence à la figure 2, le dispositif de treuillage 20 comporte un dispositif élévateur 30 portant un organe de suspension 40.

Le dispositif élévateur 30 est intégré dans l'aile dans la position aérodynamique POS1 illustrée sur la figure 2.

Dès lors, le dispositif élévateur est disposé dans cette position aérodynamique POS1 au sein d'un volume interne INT de l'aile. Ce volume interne INT est délimité au moins par un capotage 50. Ce capotage 50 forme une partie du revêtement extérieur de l'aile dans la position aérodynamique POS1, et entoure au moins partiellement le dispositif élévateur 30.

En référence à la figure 2, le dispositif élévateur 30 comporte au moins un tambour de stockage 31, au moins un organe moteur 32 et un organe de suspension 40 pouvant être partiellement entouré autour du tambour de stockage.

L'organe de suspension 40 est un organe allongé apte à porter une charge. Cet organe de suspension 40 s'étend d'une première extrémité 41 vers une deuxième extrémité 42. Par exemple, la première extrémité 41 est fixée au tambour de stockage 31. A l'inverse, la deuxième extrémité 42 saille du dispositif élévateur 30 et de l'aile. Cette deuxième extrémité 42 peut comporter un système de fixation 43, tel qu'un crochet par exemple.

L'organe moteur 32 a alors pour fonction d'enrouler l'organe de suspension, en amont de sa deuxième extrémité, autour du tambour de stockage 31 pour réduire sur requête la longueur de l'organe de suspension 40 s'étendant en dehors de l'aile 10. De plus, l'organe moteur 32 a pour fonction de dérouler l'organe de suspension en dehors du tambour de stockage 31 pour augmenter la longueur de l'organe de suspension 40 s'étendant en dehors de l'aile 10 sur requête.

A cet effet, l'organe moteur 32 comporte par exemple un moteur apte à mettre en rotation le tambour de stockage 31 selon un premier sens pour enrouler l'organe de suspension 40, et selon un deuxième sens pour dérouler l'organe de suspension 40. Cet organe moteur 32 peut être commandé par des moyens de commande usuels, tel qu'une poignée de treuillage déportée dans une cabine du fuselage par exemple.

Par ailleurs, le dispositif élévateur 30 peut comporter un carter extérieur 35. Un tel carter extérieur 35 peut comprendre un carter principal 36 dans lequel sont agencés le tambour de stockage 31 et l'organe moteur 32. De plus, le carter extérieur peut comporter une perche 37 qui est par exemple coudée et solidaire du carter principal 36. La perche 37 est traversée par l'organe de suspension 40. Cet organe de suspension 40 sort alors de la perche pour rejoindre le milieu EXT extérieur à l'aile, éventuellement en traversant une ouverture du capotage 50.

Par exemple, le dispositif élévateur est un treuil à renvoie de type Goodrich 44312.

Le capotage 50 peut éventuellement être fixé au dispositif élévateur 30. Par exemple, des pattes de fixation 38 fixent mécaniquement le dispositif élévateur à une paroi du capotage 50.

Selon un autre aspect, au moins un déflecteur 85 est fixé à l'aile 10 pour dévier un flux d'air susceptible d'impacter le dispositif de treuillage, et par exemple un crochet porté par la deuxième extrémité 42 de l'organe de suspension. Le déflecteur 85 peut comprendre au moins une plaque apte à dévier un tel flux d'air, cette plaque étant solidarisée à l'aile.

En référence à la figure 3, le dispositif élévateur 30 peut être agencé dans un des bords aérodynamiques 11, 12 de l'aile 10. Le bord aérodynamique contenant le dispositif élévateur est dénommé par commodité « bord aérodynamique de treuillage ». Par conséquent, le capotage 50 représente une partie du revêtement de ce bord aérodynamique de treuillage.

Le capotage peut notamment représenter une partie d'emplanture de ce bord aérodynamique de treuillage pour être disposé au plus près du fuselage.

Selon une autre alternative, le capotage n'est pas accolé au fuselage. Dès lors, le bord aérodynamique de treuillage comporte successivement à partir du fuselage, un tronçon d'emplanture 81, le capotage 50 puis un tronçon d'extrémité 82.

Quelle que soit l'alternative et selon la figure 3, le dispositif de treuillage 20 peut être agencé dans le bord d'attaque 12 de l'aile.

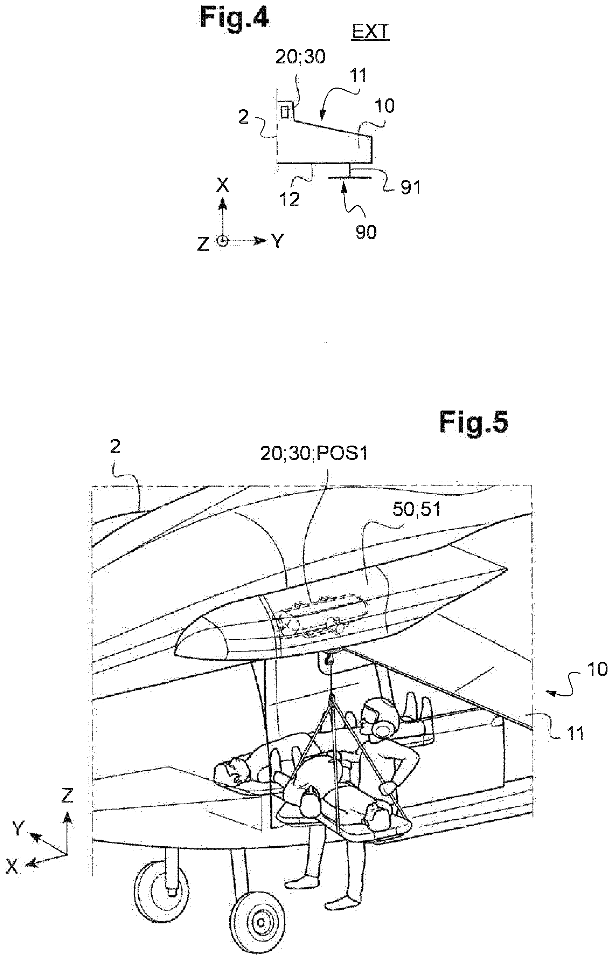

Selon la figure 4, le dispositif de treuillage 20 peut être agencé dans le bord de fuite 11 de l'aile.

Le choix de positionnement du dispositif de treuillage 20 dans le bord de fuite 11 ou le bord d'attaque 12 de l'aile peut dépendre de l'épaisseur du bord de fuite 11 et de l'épaisseur du bord d'attaque 12, ou encore de la position de l'aile par rapport à une porte d'accès latérale de l'aéronef.

De même, l'aéronef 1 peut éventuellement comporter au moins une hélice 90 portée par l'aile 10. Cette hélice 90 est disposée longitudinalement d'un côté de l'aile 10, à savoir du côté du bord de fuite 11 ou du bord d'attaque 12 de l'aile selon la figure 4. L'hélice est notamment agencée du côté d'un bord aérodynamique donné lorsque l'hélice 90 saille longitudinalement de ce bord aérodynamique donné et/ou lorsque l'arbre 91 entraînant en rotation cette hélice 1 saille longitudinalement de ce bord aérodynamique donné.

Dès lors, le dispositif de treuillage 20 peut être agencé sur le bord aérodynamique qui n'est agencé du côté de l'hélice 90.

Selon l'exemple de la figure 4, l'hélice 90 se trouve donc du côté du bord d'attaque 12 alors que le dispositif de treuillage 20 est disposé dans le bord de fuite 11.

Selon un autre aspect, lorsque le dispositif élévateur 30 est agencé dans un des bords aérodynamiques de l'aile 10, le dispositif élévateur 30 s'étend éventuellement principalement selon l'envergure de l'aile 10.

Selon la figure 5, le capotage 50 peut prendre la forme d'un carénage karman 51 de l'aile 10.

Par exemple, si le bord de fuite présente une épaisseur réduite, l'aile peut être munie d'un carénage karman 51 accueillant le dispositif de treuillage.

Le dispositif élévateur 30 peut alors s'étendre principalement longitudinalement parallèlement à la direction longitudinale X, et non plus selon l'envergure de l'aile.

Que le dispositif de treuillage soit agencé dans un carénage karman ou dans un bord aérodynamique de l'aile, le capotage 50 et le dispositif élévateur 30 peuvent être fixes en position de montage, à savoir en dehors d'opérations de maintenance. Dès lors, le dispositif élévateur est toujours dans la position aérodynamique.

Toutefois, le capotage 50 et le dispositif élévateur 30 peuvent être mobiles en position de montage pour positionner de manière optimisée le dispositif de treuillage par rapport au fuselage lors de l'opération de treuillage.

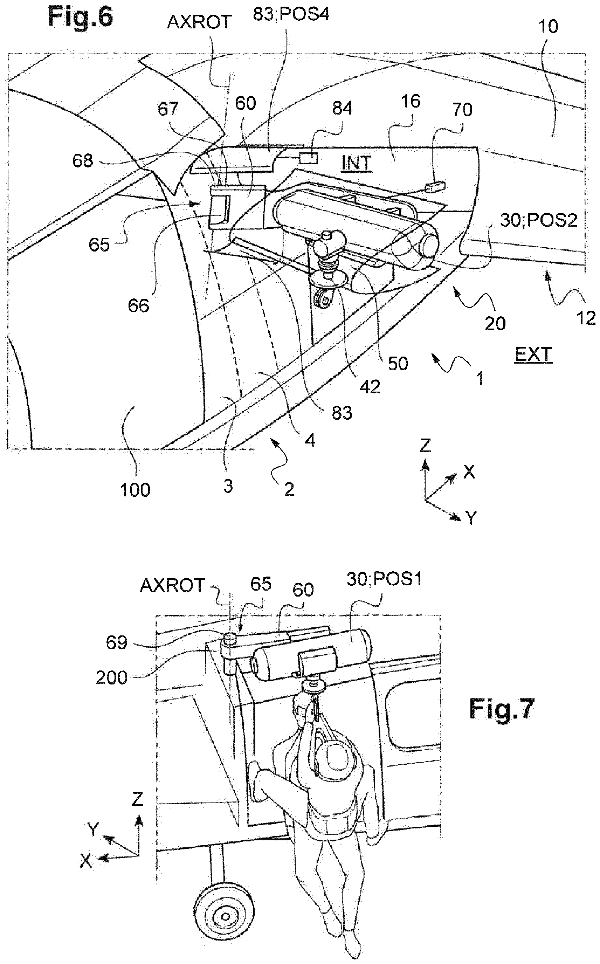

La figure 6 illustre un tel dispositif de treuillage 20 mobile agencé dans un bord aérodynamique, et notamment dans le bord d'attaque de l'aile 10.

Indépendamment de l'agencement du dispositif de treuillage 20, le dispositif de treuillage 20 peut alors comporter un bras mobile 60.

Le bras mobile est articulé à l'aile 10 ou au fuselage 2 par une articulation 65. Cette articulation 65 autorise un déplacement du bras mobile 60 par rapport à l'aile 10 et au fuselage 2 au moins autour d'un axe de rotation AXROT. Cet axe de rotation AXROT s'étend principalement en élévation Z afin que le dispositif de treuillage effectue une rotation dans un plan éventuellement sensiblement horizontal dans le référentiel de l'aéronef. L'axe de rotation AXROT est par exemple sensiblement parallèle à l'axe de rotation d'un rotor de sustentation sur un giravion, et sensiblement parallèle au tronçon de l'organe de suspension saillant de l'aile 10 en vol stationnaire et sans vent.

Selon l'exemple de la figure 6, l'articulation 65 est fixée à un cadre 4 du fuselage entourant un accès latéral vers l'intérieur du fuselage. En particulier, cette articulation 65 comporte une chape 66 fixée au fuselage 2, une chape 67 solidaire du bras mobile 60 et au moins une broche 68 traversant lesdites chapes.

Par exemple, l'articulation 65 comporte une chape mâle 66 fixée à un cadre du fuselage 2. Une chape femelle 67 est solidaire du bras mobile 60, cette chape femelle 67 comprenant deux joues agencées de part et d'autre de la chape mâle. Une broche 68 traverse successivement une première joue de la chape femelle, la chape mâle puis la deuxième joue de la chape femelle.

Selon une autre variante non représentée, l'articulation comporte un organe fixé non pas au fuselage mais à un organe de l'aile, par exemple mais non exclusivement au longeron 16 visible sur la figure 6.

Quelle que soit la variante, le dispositif élévateur 30 et le capotage 50 sont solidaires en rotation du bras mobile autour de l'axe de rotation AXROT. Par exemple, le dispositif élévateur 30 et/ou le capotage 50 sont portés par le bras mobile 60 en étant fixés à ce bras mobile par des moyens de fixation usuels.

Le bras mobile 60 et le capotage 50 sont ainsi conjointement mobiles entre la position aérodynamique POS1 et une position dite « position déportée ».

Dans la position aérodynamique POS1, le capotage 50 ferme le volume intérieur INT. L'aile a alors un aspect usuel puisque le dispositif élévateur est masqué à l'intérieur de l'aile. Seul le crochet fixé à la deuxième extrémité 42 de l'organe de suspension saillant en dehors de l'aile laisse suspecter la présence d'un tel dispositif élévateur.

Par contre, le capotage 50 ouvre le volume intérieur INT sur le milieu EXT extérieur à l'aéronef 1 dans la position déportée POS2 illustrée sur la figure 6.

Pour mouvoir le bras mobile 60, le dispositif de treuillage 20 peut comporter un système motorisé 70 par exemple relié au bras mobile 60. Le système motorisé comprend alors un moteur et un organe de commande commandant ce moteur pour déplacer en rotation le bras mobile 60 autour de l'axe de rotation AXROT.

Par exemple, le moteur est fixé d'une part au bras mobile 60 et, d'autre part, à un organe de l'aile ou à l'articulation 65 ou encore au fuselage.

Lorsque le dispositif de treuillage est fixé à un bord aérodynamique muni d'un tronçon d'emplanture 81, ce tronçon d'emplanture 81 peut comporter au moins un volet 83 mobile par rapport aux autres éléments de l'aile. Selon l'exemple représenté sur la figure 6, le tronçon d'emplanture 81 peut comporter deux volets 83 s'ouvrant en « huitre ».

Un système de mobilité est relié à au moins un volet 83 pour déplacer ce volet entre une position fermée POS3 et une position ouverte POS4 visible sur la figure 6. Ce système de mobilité 84 peut comprendre un moteur, ou encore une chaîne mécanique reliée au bras mobile par exemple.

En effet, lorsque le bras mobile est fixé au fuselage, la rotation du bras mobile peut être entravée par un revêtement du tronçon d'emplanture.

Dès lors, cette caractéristique optionnelle permet de positionner le volet 83 dans une position fermée POS3 entravant le déplacement du bras mobile 60 quand ce bras mobile est dans la position aérodynamique POS1. L'aile 10 se trouve alors dans une configuration équivalente à la configuration de la figure 3. Le volet 83 et le capotage forment ainsi conjointement un revêtement continu du bord aérodynamique.

Par contre, lorsque le bras mobile est déplacé en rotation, chaque volet s'ouvre pour atteindre la position ouverte POS4 pour ne pas entraver la rotation du bras mobile.

Par exemple, chaque volet 83 et le bras mobile 60 sont respectivement dans la position fermée POS3 et dans la position aérodynamique POS1 en dehors des opérations de treuillage. L'aile est alors parfaitement aérodynamique.

Lors du treuillage, le volet 83 et le bras mobile 60 sont par exemple respectivement dans la position fermée POS3 et dans la position aérodynamique POS1 lorsqu'une charge est montée vers l'aéronef ou descendue vers le sol. Par contre, le volet 83 et le bras mobile 60 sont positionnés dans la position ouverte POS4 et dans la position déportée POS2 pour rapprocher la charge du fuselage durant une opération d'embarquement de la charge dans l'aéronef ou de débarquement de la charge hors de l'aéronef.

Les figures 7 à 9 illustrent un dispositif de treuillage mobile disposé dans un carénage karman.

En particulier, la figure 7 présente le dispositif élévateur 30 et le bras mobile 60. Le capotage a été enlevé pour permettre la visualisation claire du dispositif élévateur 30.

Dans cette configuration, l'articulation 65 peut par exemple être fixée à un plancher mécanique du fuselage. Par exemple, l'articulation 65 comporte une tige 69 liée au plancher mécanique 200. Dès lors, le bras mobile 60 comporte une chape mâle disposée autour de la tige 69.

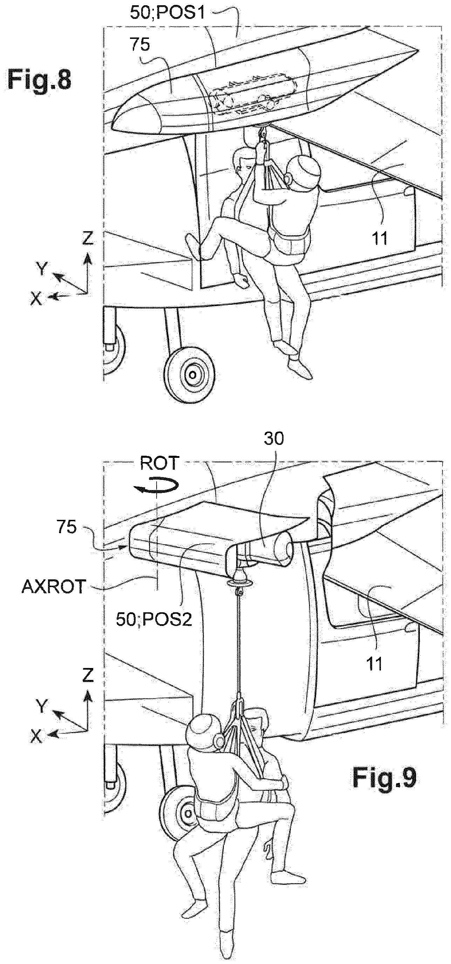

Selon la figure 8, le fuselage 2 peut comporter un capot fixe 75 accolé au capotage 50 dans la position aérodynamique.

Dans la position aérodynamique POS1, le capotage 50 ne recouvre pas le capot fixe 75.

En référence à la figure 9, lorsque le capotage 50 ainsi que le bras mobile 60 et le dispositif élévateur 30 effectuent une rotation ROT pour atteindre la position déportée POS2, le capotage coulisse sur la peau du capot fixe 75, et recouvre partiellement le capot fixe 75.

Lors du treuillage, le capotage 50 ainsi que le bras mobile 60 et le dispositif élévateur 30 sont par exemple dans la position déportée POS2 de la figure 9 lorsqu'une charge est montée vers l'aéronef ou descendue vers le sol. Par contre, le capotage 50 ainsi que le bras mobile 60 et le dispositif élévateur 30 sont positionnés dans la position aérodynamique POS1 de la figure 8 pour rapprocher la charge du fuselage durant une opération d'embarquement de la charge dans l'aéronef ou de débarquement de la charge hors de l'aéronef.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'une aile (10) s'étendant longitudinalement d'un bord aérodynamique dit « bord de fuite (11) » vers un bord aérodynamique dit « bord d'attaque (12) », ledit aéronef étant pourvu d'un dispositif de treuillage (20), ledit dispositif de treuillage (20) étant pourvu d'un dispositif élévateur (30) qui comporte un tambour de stockage (31), ledit dispositif de treuillage (20) étant pourvu d'un organe de suspension (40) qui s'étend d'une première extrémité vers une deuxième extrémité libre saillant dudit dispositif élévateur (30), ledit dispositif élévateur (30) comportant un organe moteur (32) pour enrouler ledit organe de suspension (40) autour du tambour de stockage (31) et dérouler ledit organe de suspension (40) en dehors du tambour de stockage (31), ledit dispositif élévateur (30) étant au moins partiellement entouré par un capotage (50) de cette aile (10), ledit dispositif élévateur (30) étant agencé dans un volume intérieur (INT) de l'aile (10) dans une position dite « position aérodynamique (POS1) » **caractérisé en ce que** ledit dispositif de treuillage (20) comporte un bras mobile (60) porté par une articulation (65), ladite articulation (65) conférant au bras mobile (60) au moins un degré de liberté en rotation autour d'un axe de rotation (AXROT) par rapport à l'aile (10), ledit dispositif élévateur (30) étant porté par ledit bras mobile (60), ledit bras mobile (60) et ledit capotage (50) étant conjointement mobiles entre la position aérodynamique (POS1) et une position dite « position déportée (POS2) ».

2. Aéronef selon la revendication 1,
**caractérisé en ce que** ledit capotage (50) est un carénage karman (51) de ladite aile (10).

3. Aéronef selon la revendication 1,
**caractérisé en ce que** ledit dispositif élévateur (30) étant agencé dans un desdits bords aérodynamiques de l'aile (10), ledit capotage (50) est une partie du bord aérodynamique contenant ledit dispositif élévateur (30).

4. Aéronef selon la revendication 3,
**caractérisé en ce que** ladite aile (10) portant une hélice (90) disposée longitudinalement d'un côté d'un desdits bords aérodynamiques (12), ledit dispositif élévateur (30) est agencé dans l'autre bord aérodynamique (11).

5. Aéronef selon l'une quelconque des revendications 3 à 4,
**caractérisé en ce que** ledit bord aérodynamique contenant ledit dispositif élévateur (30) comprend successivement un tronçon d'emplanture (81), ledit capotage (50) puis un tronçon d'extrémité (82).

6. Aéronef selon l'une quelconque des revendications 1 à 5,
**caractérisé en ce que** ledit organe de suspension (40) traverse ledit capotage (50).

7. Aéronef selon l'une quelconque des revendications 1 à 6,
**caractérisé en ce que** ledit capotage (50) ferme le volume intérieur (INT) dans ladite position aérodynamique (POS1), ledit capotage (50) ouvrant le volume intérieur (INT) sur un milieu (EXT) extérieur à l'aéronef (1) dans la position déportée (POS2).

8. Aéronef selon l'une quelconque des revendications 1 à 7,
**caractérisé en ce que** ledit dispositif de treuillage (20) comporte un système motorisé (70) relié au bras mobile (60) pour déplacer en rotation ledit bras mobile (60) autour de l'axe de rotation (AXROT).

9. Aéronef selon l'une quelconque des revendications 1 à 8,
**caractérisé en ce que** ledit aéronef (1) comportant un fuselage (2) muni d'au moins un cadre (4) et d'un revêtement (3) fixé au cadre (4), ladite articulation (65) est fixée au cadre (4).

10. Aéronef selon l'une quelconque des revendications 1 à 9,
**caractérisé en ce que** ladite articulation (65) est fixée à un organe (16) de ladite aile.

11. Aéronef selon la revendication 5,
**caractérisé en ce que** ledit tronçon d'emplanture (81) comporte au moins un volet (83) mobile et un système de mobilité (84), ledit système de mobilité (84) coopérant avec ledit volet (83) pour déplacer le volet entre une position fermée (POS3) et une position ouverte (POS4), ledit volet (83) entravant le déplacement du bras mobile (60) dans la position fermée (POS3) et n'entravant pas ledit déplacement dans la position ouverte (POS4).

12. Aéronef selon l'une quelconque des revendications 1 à 11,
**caractérisé en ce que** ladite aile (10) comporte au moins un déflecteur (85) pour dévier un flux d'air susceptible d'impacter le dispositif de treuillage.

13. Aéronef selon l'une quelconque des revendications 1 à 12,
**caractérisé en ce que** ledit aéronef (1) est un aéronef apte à voler en stationnaire.

## Patentansprüche

1. Luftfahrzeug (1) mit einem Flügel (10), der sich in Längsrichtung von einer "Hinterkante (11)" genannten aerodynamischen Kante bis zu einer "Vorderkante (12)" genannten aerodynamischen Kante erstreckt, wobei das Luftfahrzeug mit einer Windenvorrichtung (20) versehen ist, wobei die Windenvorrichtung (20) mit einer Hebevorrichtung (30) versehen ist, die eine Speichertrommel (31) aufweist, wobei die Windenvorrichtung (20) mit einem Aufhängeelement (40) versehen ist, das sich von einem ersten Ende zu einem zweiten freien Ende erstreckt, das gegenüber der Hebevorrichtung (30) vorsteht, wobei die Hebevorrichtung (30) ein Antriebsorgan (32) aufweist, um das Aufhängeelement (40) um die Speichertrommel (31) aufzuwickeln und um das Aufhängeelement (40) von der Speichertrommel (31) abzuwickeln, wobei die Hebevorrichtung (30) mindestens teilweise von einer Verkleidung (50) des Flügels (10) umgeben ist, wobei die Hebevorrichtung (30) in einem Innenvolumen (INT) des Flügels (10) in einer "aerodynamische Stellung (POS1)" genannten Stellung angeordnet ist,
**dadurch gekennzeichnet, dass** die Windenvorrichtung (20) einen beweglichen Arm (60) aufweist, der von einem Gelenk (65) getragen wird, wobei das Gelenk (65) dem beweglichen Arm (60) mindestens einen Rotationsfreiheitsgrad um eine Rotationsachse (AXROT) relativ zu dem Flügel (10) verleiht, wobei die Hebevorrichtung (30) von dem beweglichen Arm (60) getragen wird, wobei der bewegliche Arm (60) und die Verkleidung (50) zusammen zwischen einer aerodynamischen Stellung (POS1) und einer "versetzte Stellung (POS2)" genannten Stellung beweglich sind.

2. Luftfahrzeug nach Anspruch 1,
**dadurch gekennzeichnet, dass** die Verkleidung (50) eine Flügelverkleidung (51) des Flügels (10) ist.

3. Luftfahrzeug nach Anspruch 1,
**dadurch gekennzeichnet, dass** die Hebevorrichtung (30) in einer der aerodynamischen Kanten des Flügels (10) angeordnet ist, wobei die Verkleidung (50) ein Teil der aerodynamischen Kante ist, die die Hebevorrichtung (30) enthält.

4. Luftfahrzeug nach Anspruch 3,
**dadurch gekennzeichnet, dass** der Flügel (10) einen Propeller (90) aufweist, der in Längsrichtung einer Seite einer der aerodynamischen Kanten (12) angeordnet ist, wobei die Hebevorrichtung (30) in der anderen aerodynamischen Kante (11) angeordnet ist.

5. Luftfahrzeug nach einem der Ansprüche 3 bis 4,
**dadurch gekennzeichnet, dass** die aerodynamische Kante, die die Hebevorrichtung (30) beinhaltet, hintereinander einen Fußabschnitt (81), die Verkleidung (50) und dann einen Endabschnitt (82) aufweist.

6. Luftfahrzeug nach einem der Ansprüche 1 bis 5,
**dadurch gekennzeichnet, dass** das Aufhängeelement (40) die Verkleidung (50) durchquert.

7. Luftfahrzeug nach einem der Ansprüche 1 bis 6,
**dadurch gekennzeichnet, dass** die Verkleidung (50) das Innenvolumen (INT) in der aerodynamischen Stellung (POS1) verschließt, und die Verkleidung (50) das Innenvolumen (INT) zum Äußeren (EXT) des Luftfahrzeugs (1) in der versetzten Stellung (POS2) öffnet.

8. Luftfahrzeug nach einem der Ansprüche 1 bis 7,
**dadurch gekennzeichnet, dass** die Windenvorrichtung (20) ein motorisiertes System (70) aufweist, das mit dem beweglichen Arm (60) verbunden ist, um den beweglichen Arm (60) um die Rotationsachse (AXROT) zu drehen.

9. Luftfahrzeug nach einem der Ansprüche 1 bis 8,
**dadurch gekennzeichnet, dass** das Luftfahrzeug (1) einen Rumpf (2) aufweist, der mit mindestens einem Rahmen (4) und einer an dem Rahmen (4) befestigten Verkleidung (3) versehen ist, wobei das Gelenk (65) an dem Rahmen (4) befestigt ist.

10. Luftfahrzeug nach einem der Ansprüche 1 bis 9,
**dadurch gekennzeichnet, dass** das Gelenk (65) an einem Element (16) des Flügels befestigt ist.

11. Luftfahrzeug nach Anspruch 5,
**dadurch gekennzeichnet, dass** der Fußabschnitt (81) mindestens eine bewegliche Klappe (83) und ein Mobilitätssystem (84) aufweist, wobei das Mobilitätssystem (84) mit der Klappe (83) zusammenwirkt, um die Klappe zwischen einer geschlossenen Stellung (POS3) und einer offenen Stellung (POS4) zu bewegen, wobei die Klappe (83) die Bewegung des beweglichen Arms (60) in die geschlossene Stellung (POS3) hemmt und die Bewegung in die offene Stellung (POS4) nicht hemmt.

12. Luftfahrzeug nach einem der Ansprüche 1 bis 11,
**dadurch gekennzeichnet, dass** der Flügel (10) mindestens ein Leitblech (85) aufweist, um eine Luftströmung umzulenken, die auf die Windenvorrichtung treffen könnte.

13. Luftfahrzeug nach einem der Ansprüche 1 bis 12,
**dadurch gekennzeichnet, dass** das Luftfahrzeug (1) ein Luftfahrzeug ist, welches schweben kann kann.

## Claims

1. Aircraft (1) equipped with a wing (10) extending longitudinally from an aerodynamic edge known as "trailing edge (11)" to an aerodynamic edge known as "leading edge (12)", said aircraft being provided with a hoisting device (20), said hoisting device (20) being provided with a lifting device (30) which comprises a storage drum (31), said hoisting device (20) being provided with a suspension member (40) which extends from a first end to a second free end projecting from said lifting device (30), said lifting device (30) comprising a drive member (32) for winding said suspension member (40) around the storage drum (31) and unwinding said suspension member (40) from the storage drum (31), said lifting device (30) being surrounded at least in part by a cowling (50) of said wing (10), said lifting device (30) being arranged in an interior space (INT) of the wing (10) in a position known as "aerodynamic position (POS1)", **characterised in that** said hoisting device (20) comprises a moving arm (60) supported by a hinge (65), said hinge (65) providing the moving arm (60) with at least one rotational degree of freedom about an axis of rotation (AXROT) with respect to the wing (10), said lifting device (30) being supported by said moving arm (60), said moving arm (60) and said cowling (50) being jointly movable between the aerodynamic position (POS1) and a position known as "offset position (POS2)".

2. Aircraft according to claim 1, **characterised in that** said cowling (50) is a Karman fairing (51) of said wing (10).

3. Aircraft according to claim 1, **characterised in that** said lifting device (30) is arranged in one of said aerodynamic edges of the wing (10), said cowling (50) being part of the aerodynamic edge containing said lifting device (30).

4. Aircraft according to claim 3, **characterised in that** said wing (10) supports a propeller (90) arranged longitudinally on one side of one of said aerodynamic edges (12), said lifting device (30) being arranged in the other aerodynamic edge (11).

5. Aircraft according to any of preceding claims 3 to 4, **characterised in that** said aerodynamic edge containing said lifting device (30) successively comprises a wing root portion (81), said cowling (50) and then an end portion (82).

6. Aircraft according to any of claims 1 to 5, **characterised in that** said suspension member (40) passes through said cowling (50).

7. Aircraft according to any of claims 1 to 6, **characterised in that** said cowling (50) closes the interior space (INT) in said aerodynamic position (POS1), said cowling (50) opening the interior space (INT) to an environment (EXT) outside the aircraft (1) in the offset position (POS2).

8. Aircraft according to any of claims 1 to 7, **characterised in that** said hoisting device (20) comprises a motorised system (70) connected to the moving arm (60) in order to move said moving arm (60) in rotation about the axis of rotation (AXROT).

9. Aircraft according to any of claims 1 to 8, **characterised in that** said aircraft (1) comprises a fuselage (2) equipped with at least one frame (4) and with a skin (3) attached to the frame (4), said hinge (65) being attached to the frame (4).

10. Aircraft according to any of claims 1 to 9, **characterised in that** said hinge (65) is attached to a member (16) of said wing.

11. Aircraft according to claim 5, **characterised in that** said wing root portion (81) comprises at least one moving flap (83) and a mobility system (84), said mobility system (84) interacting with said flap (83) to move the flap between a closed position (POS3) and an open position (POS4), said flap (83) impeding the movement of the moving arm (60) in the closed position (POS3) and not impeding said movement in the open position (POS4).

12. Aircraft according to any of claims 1 to 11, **characterised in that** said wing (10) comprises at least one deflector (85) for diverting a flow of air likely to strike the hoisting device.

13. Aircraft according to any of claims 1 to 12, **characterised in that** said aircraft (1) is an aircraft that is capable of hovering.
